# EUROPEAN PATENT SPECIFICATION

(11) **EP 2 955 311 B1**
(45) Date of publication and mention of the grant of the patent: **18.10.2017**
(21) Application number: 15168696.1
(22) Date of filing: 21.05.2015
(51) Int. Cl.: E06B 3/54, E06B 3/30, E06B 3/58, F16B 21/09

(54) **SASH WITH LOCKING ELEMENT**
SCHIEBEELEMENT MIT VERSCHLUSSELEMENT
CHÂSSIS AVEC ÉLÉMENT DE VERROUILLAGE

(30) Priority: 11.06.2014 IT BS20140106
(43) Date of publication of application: 16.12.2015
(60) Divisional application: 17189738.2
(73) Proprietor: Europrofili Group S.p.A., 25045 Castegnato, Brescia (IT)
(72) Inventor: MUSSINELLI, Giorgio, I-25045 Castegnato, BRESCIA (IT)
(74) Representative: Pulieri, Gianluca Antonio

(56) References cited:
- EP-A1- 2 270 306
- WO-A1-01/53643

## Description

This invention relates to a sash, a locking element part of the sash, and methods of assembly and disassembly of the sash.

A sash is generally known as a component suitable to achieve the closure of an architectural opening; in other words, sashes are known for achieving a division between two environments otherwise in communication through said architectural opening.

The existence is also known of embodiments of sashes comprising several parts and portions, for example comprising movable parts, usually rotating, known as casements, and fixed parts, locked to the sub-frame, known as a frame.

According to some embodiments, the sashes divide the external environment from the internal environment, or divide two internal environments.

According to some embodiments, the sashes that divide two internal environments, or the sashes that divide an internal environment from an external environment, can have different characteristics to respond to different needs, for example depending on the types of said environments, such as whether or not they are exposed to the weather.

According to a preferred embodiment, the sash covered by this invention is particularly suited to the division of an internal environment from an external environment, but can also be used to divide two internal environments.

Preferably, the sashes of this invention are of the type having a wooden part and a part in another material, for example aluminium or PVC.

Numerous sash solutions of this type are already known in the prior art. EP 2 270 306 A1 discloses a sash and locking element according to the preambles of claims 1 and 15.

This invention is placed in the preceding context, proposing to provide a further alternative to the types of sashes already known.

This objective is achieved by a sash, a locking element and methods of assembly and disassembly, hereinafter described and claimed.

The object of this invention will now be described in detail, with the help of the attached tables, wherein:

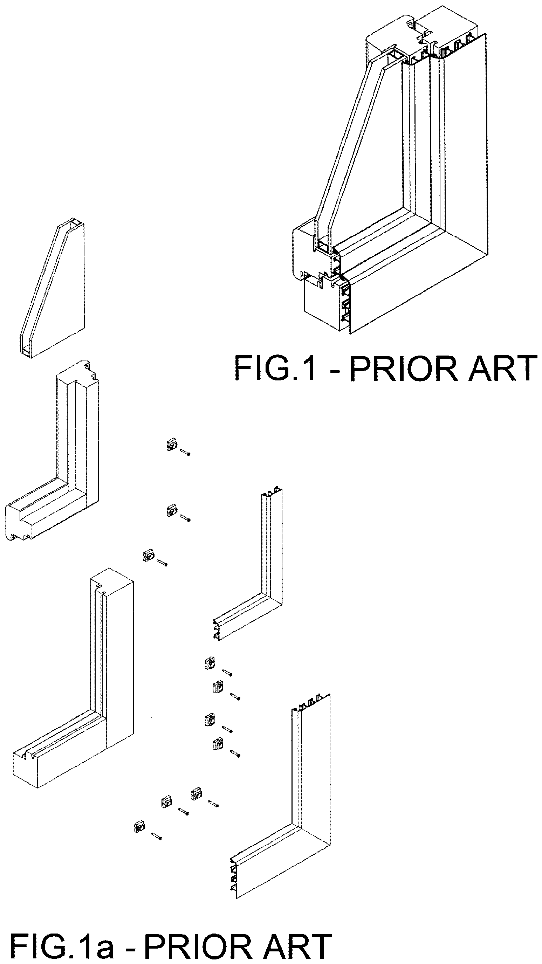

- Figures 1 and la respectively represent a perspective view of a corner of a sash mounted and in an exploded view according to the embodiments of the prior art;

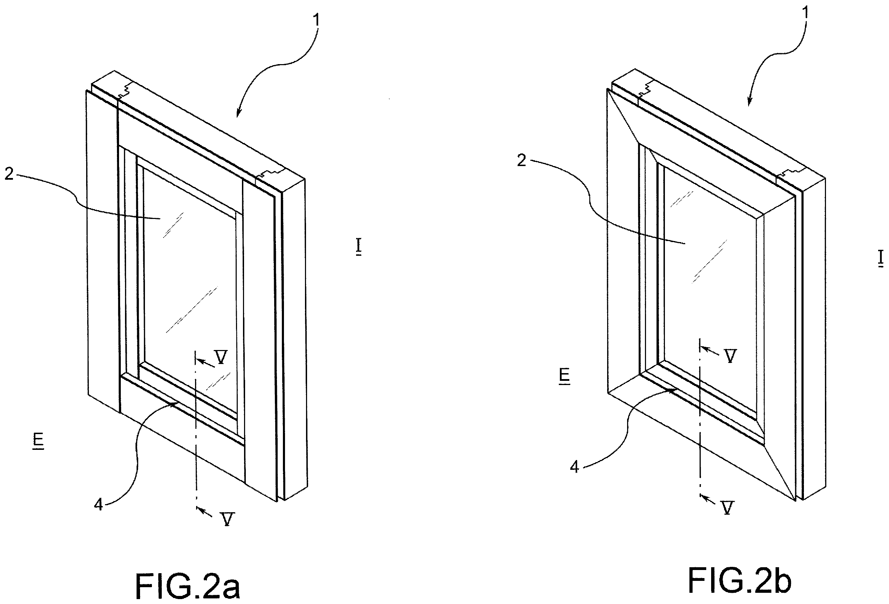

- Figures 2a and 2b illustrate two perspective views of a sash, covered by this invention, according to two preferred embodiments;

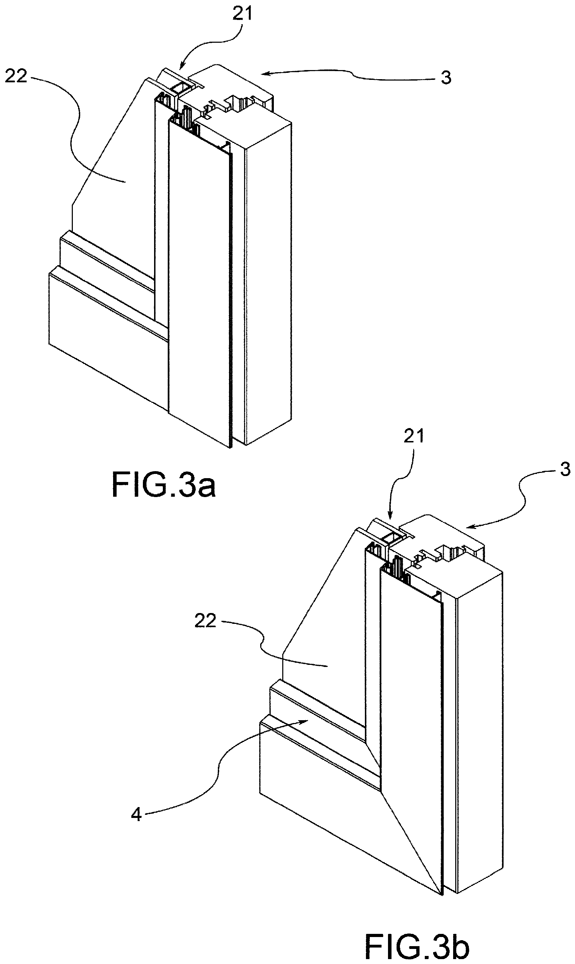

- Figures 3a and 3b describe two perspective views of a corner of the sashes shown in Figures 2a and 2b;

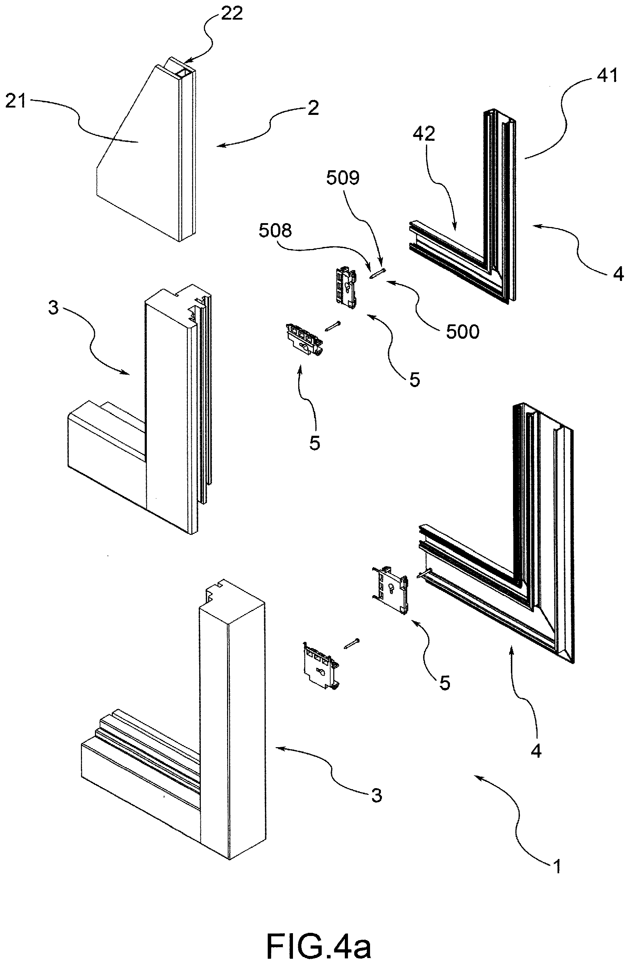

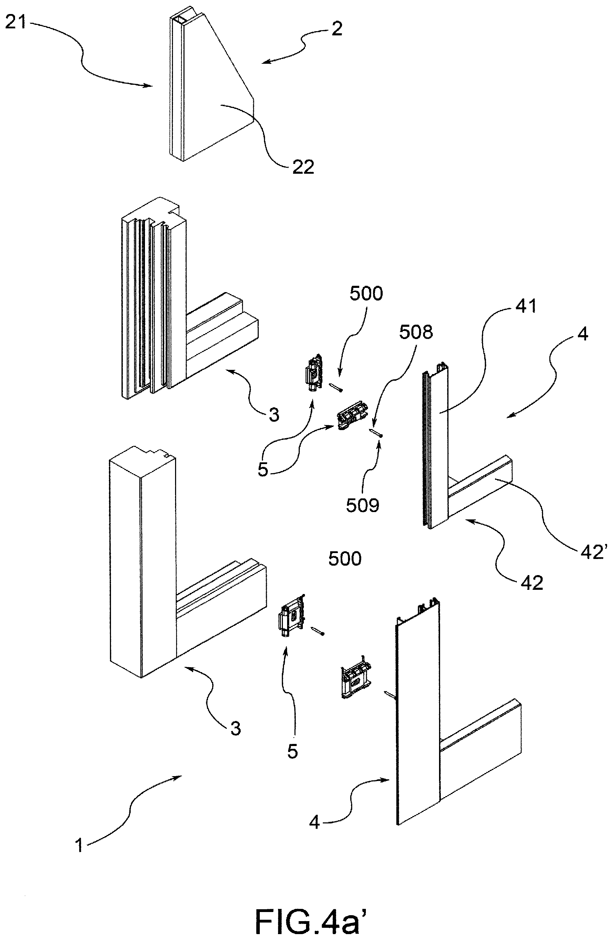

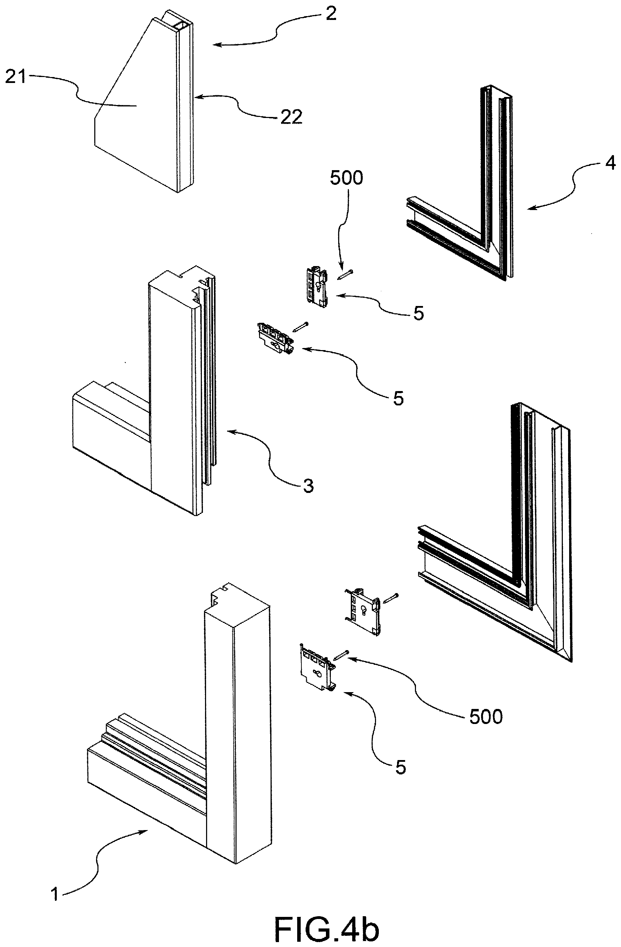

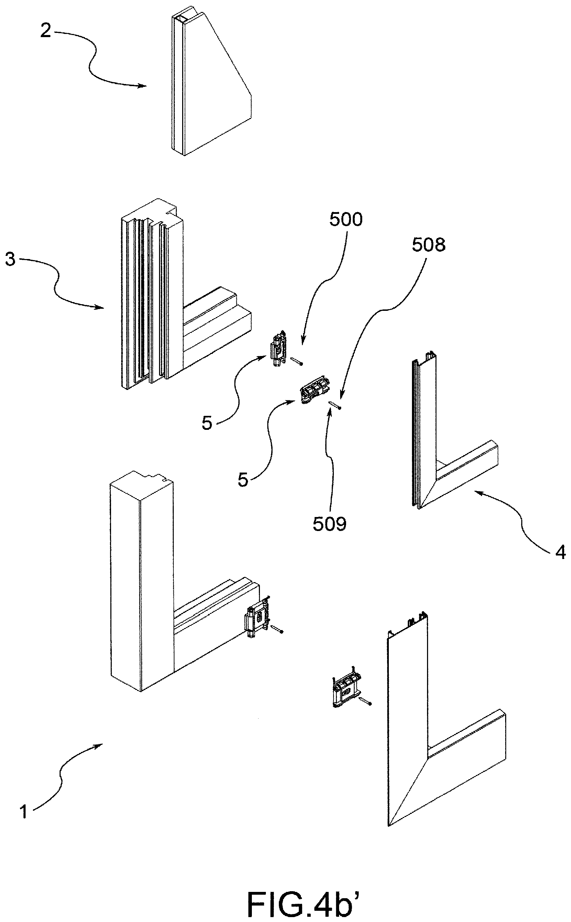

- Figures 4a and 4a' and 4b and 4b' respectively illustrate two perspective views, front and rear, in an exploded view of the corners of the sashes of Figures 3a and 3b;

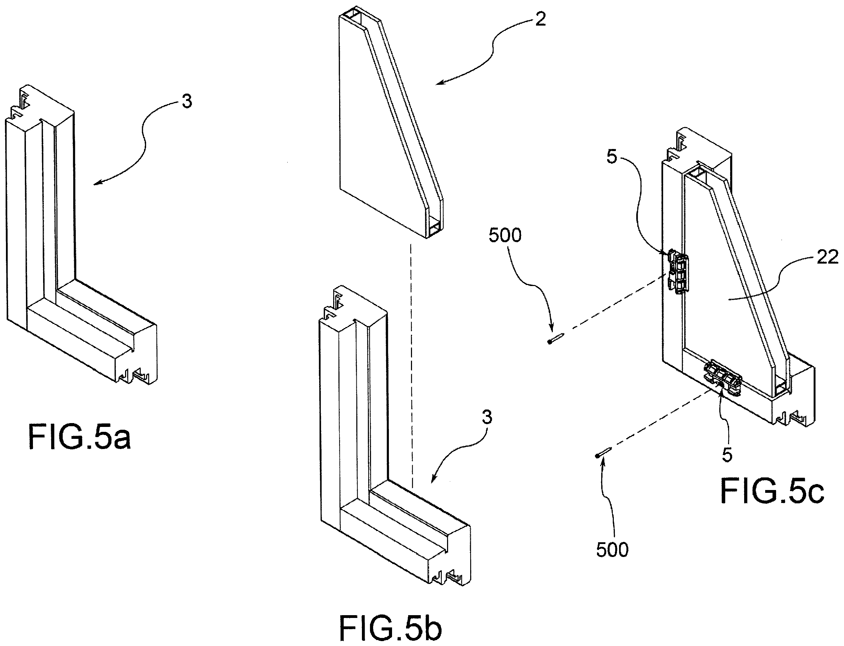

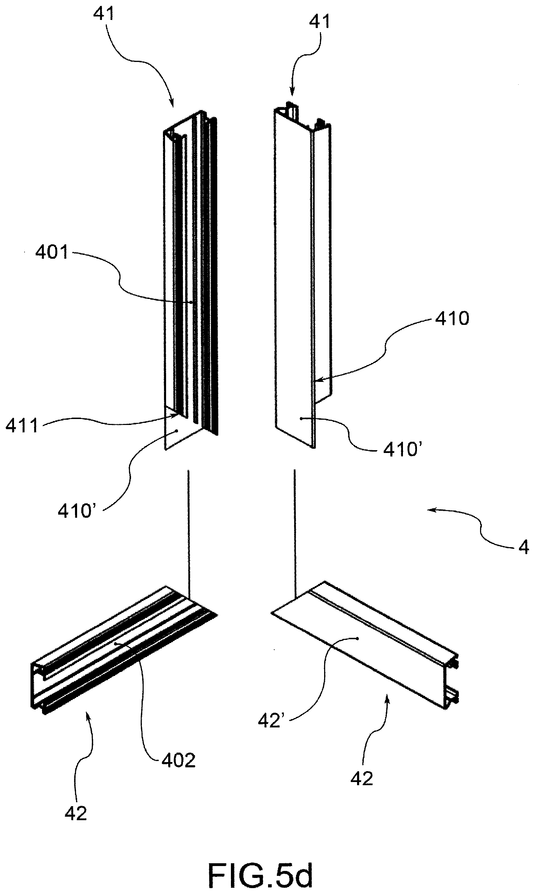

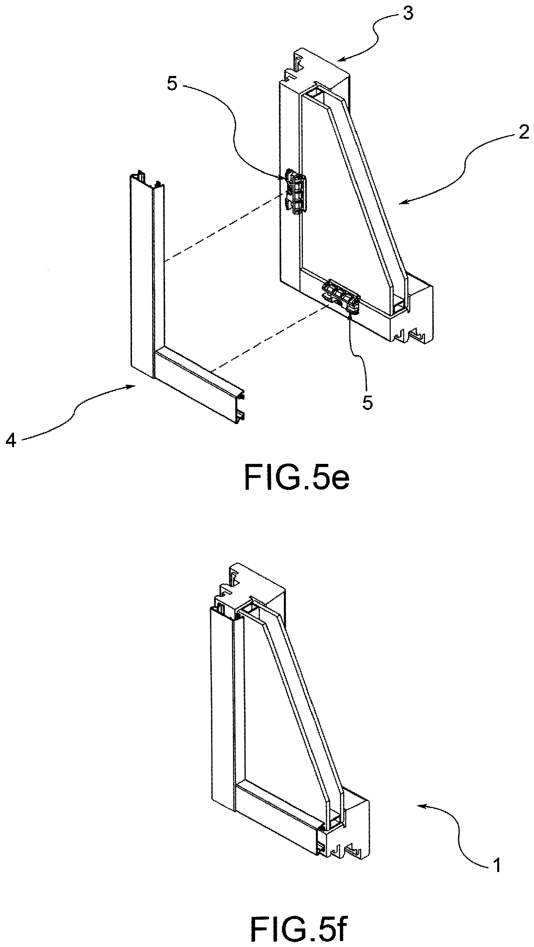

- Figures 5a to 5f represent the assembly steps of the sash, preferably of the casement comprised in it, according to a preferred embodiment, for example shown in Figures 2a, 3a, 4a and 4a';

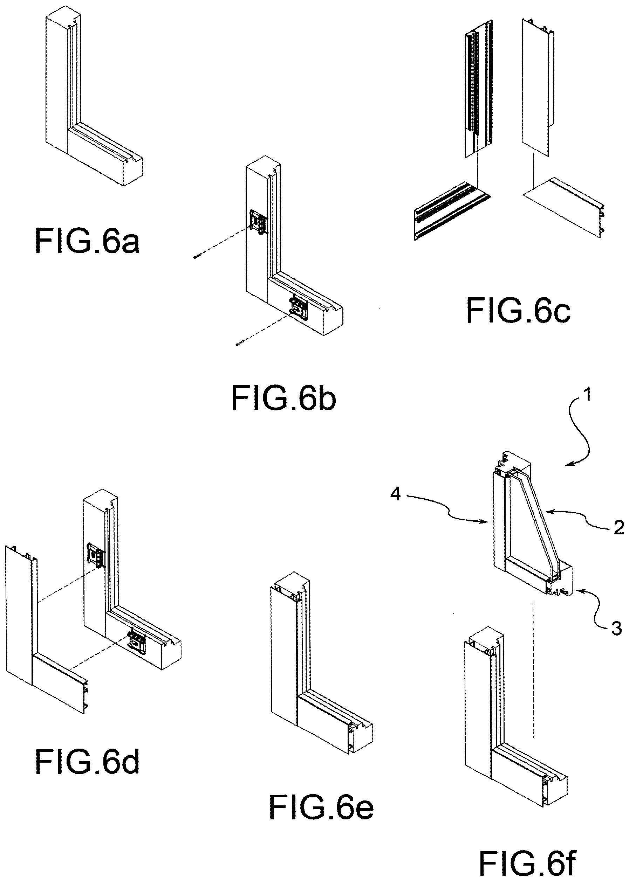

- Figures 6a to 6f represent the assembly steps of the sash, and in particular the frame comprised in it, according to a preferred embodiment, for example shown in Figures 2a, 3a, 4a and 4a';

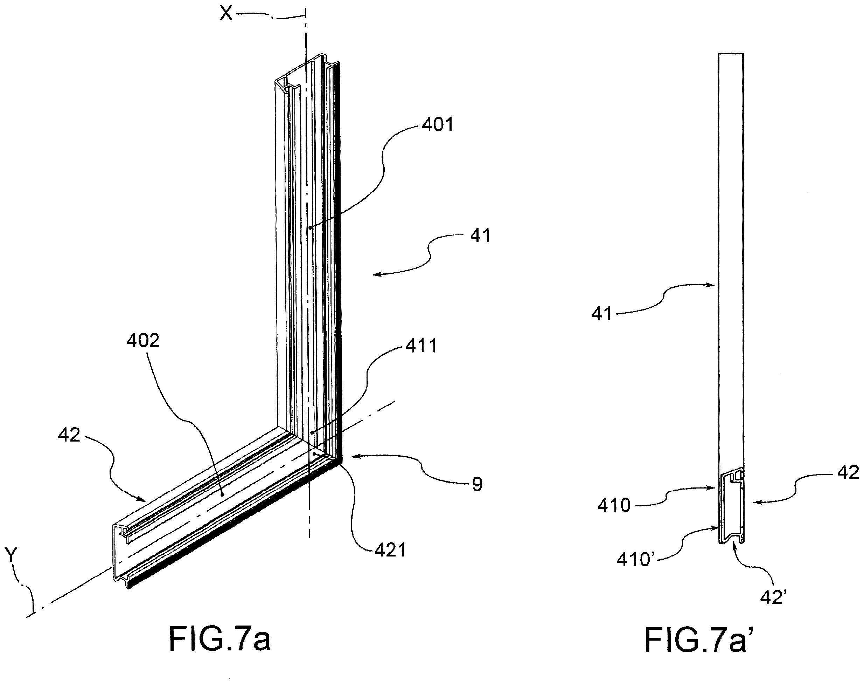

- Figures 7a and 7a' respectively represent a rear perspective view and a side view, of a corner of the cover frame where the engagement between upright element and transversal element is obtained for example by welding;

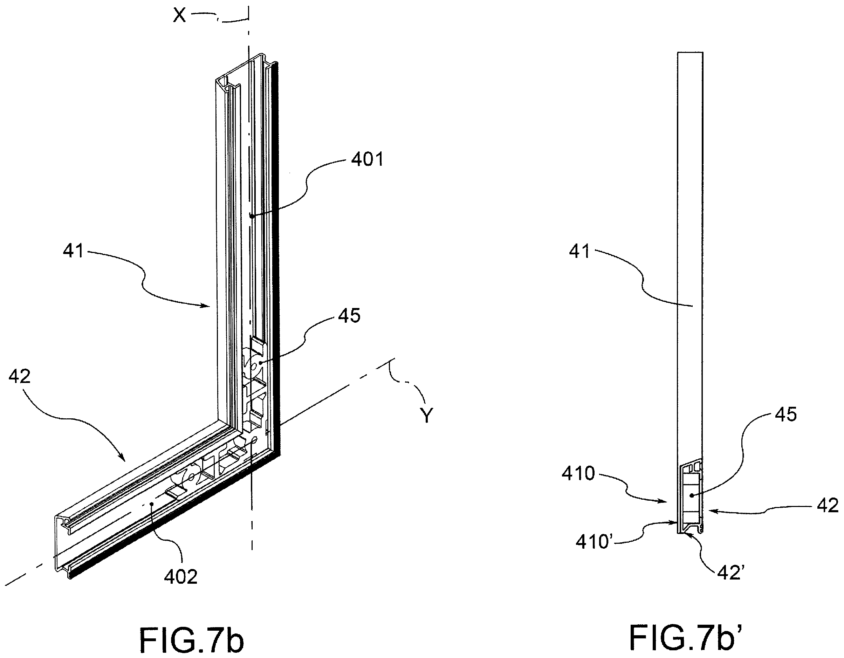

- Figures 7b and 7b' respectively represent a rear perspective view and a side view, of a corner of the cover frame where the engagement between upright element and transversal element is obtained with the joint element is a preferred embodiment;

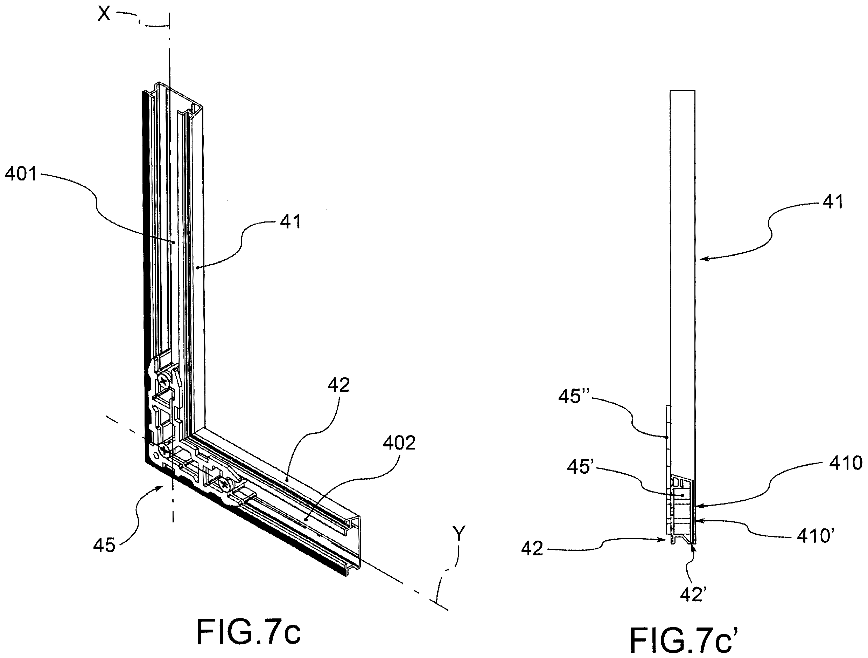

- Figures 7c and 7c' respectively represent a rear perspective view and a side view, of a corner of the cover frame where the engagement between upright element and transversal element is obtained with the joint element is a further preferred embodiment;
- Figure 8a shows a section of the cover frame in accordance with a preferred embodiment;
- Figure 8b shows a section of the sash along the section plane V-V in Figures 2a and 2b;

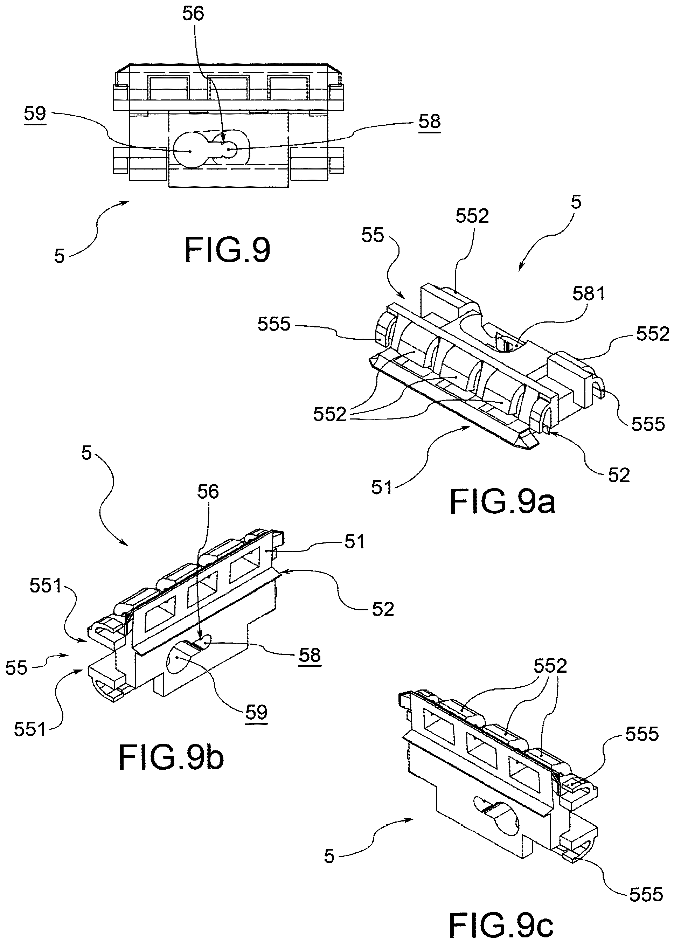

- Figures 9, 9a, 9b and 9c are respectively a front view and three perspective views of the locking element, covered by this invention, according to a preferred embodiment;

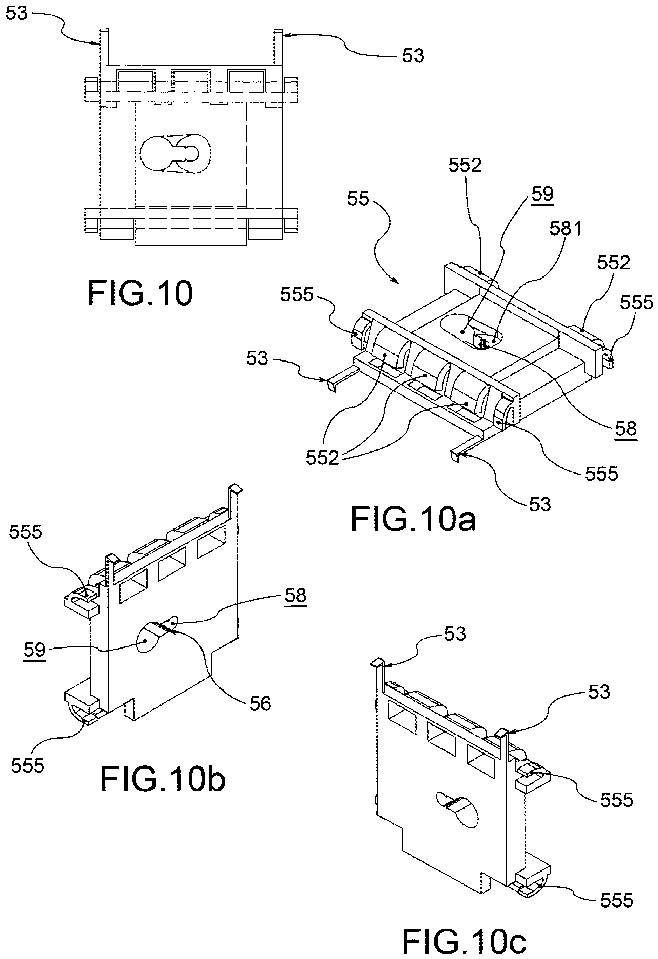

- Figures 10, 10a, 10b and 10c are respectively a front view and three perspective views of the casing locking element, according to a preferred embodiment.

With reference to the above figures, reference number 1 identifies, in its entirety, a sash for closing an architectural opening. Preferably, the sash 1 identifies an inner side I, facing an internal environment, and an outer side E, facing an external environment, for example outdoors, and therefore exposed to the weather.

Preferably, the sash 1 is a window or a French window. In the description that follows, window and French window preferably mean each solution of the sash 1 in which a moveable casement is present; for example, in other words, the term window is also understood to include solutions such as skylights or French windows.

In addition the sash 1 preferably comprises a transparent element 2 of a planar shape, suitable to allow the passage of light, having an inner face 21 and an outer face 22.

Preferably, the transparent element 2 is a glass plate, or is double glazing or a glass block, or a glass block with integrated curtain.

According to a preferred embodiment, the sash 1 comprises a weight-bearing frame 3 suitable for supporting the transparent element 2, locking it by engaging the inner face 21.

Preferably, the weight-bearing frame 3 is made of wood.

Preferably, the weight-bearing frame 3 is placed towards the inside.

According to a preferred embodiment, the sash comprises a cover frame 4 suitable for protecting the weight-bearing frame 3.

Preferably, the cover frame 4 is placed towards the outside.

Preferably, the cover frame 4 is made of a material suitable to resist the weather, for example aluminium; there are also embodiments wherein said cover frame 4 is made of polymeric material, for example PVC.

According to a preferred embodiment the sash 1 comprises a plurality of locking elements 5 fixed to the weight-bearing frame 3 and supporting the cover frame 4; the cover frame 4, fully described below, is suitable to snap-engage on said locking elements 5.

According to a preferred embodiment, the cover frame 4 comprises elements uprights 41 and transversal elements 42 suitable to engage each other.

Preferably, the upright elements 41 and transversal elements 42 are suitable to be mutually arranged in such a way as to lie on a same plane.

Preferably, the upright elements 41 and transversal elements 42 are suitable to be arranged one perpendicular to the other.

Preferably, the element 41 has mounted, at its end, an upright engagement surface 411 and the transversal element 42 has, at its end, a transversal engagement surface 421 angled to allow said mutual engagement at the corner between the upright element 41 and transversal element 42.

According to a preferred embodiment, the upright elements 41 and transversal elements 42 are angled for example at 45° to allow said mutual engagement; however, there are several embodiments wherein said angle is different, for example 60° for the upright element 41 and 30° for the transversal element 42 or vice versa.

In other words, the upright element 41 extends along an upright axis X-X and the upright engagement surface 411 is inclined, preferably at 45°, with respect to said upright axis X-X. In addition, the transversal element 42 extends along a transversal axis Y-Y and the transversal engagement surface 421 is inclined complementarily to the transversal engagement surface 411, preferably 45°, with respect to said transversal axis Y-Y.

According to a preferred embodiment, the engagement between the upright element 41 and the transversal element 42 identifies a slot 9 between said components.

According to a preferred embodiment, the upright element 41 comprises a cover layer 410 surmounting said slot 9. In other words, the engagement between the upright engagement surface 411 and the transversal engagement surface 421 occurs below said cover layer 410.

According to a preferred embodiment, the cover layer 410 extends, with respect to the upright engagement surface 41, delimiting a triangular cover portion 410'.

Preferably, the upright element 41 comprises, at the two ends, two upright engagement surfaces 411, both below the cover layer 410.

In other words, seen from the front, the upright element 41 is rectangular. Below its ends, the upright element 41 therefore has upright engagement surfaces 411 in order to allow the above-described engagement with the transversal elements 42.

According to a preferred embodiment, the transversal element 42 has an outer transversal surface 42', facing towards the outer side, wherein said outer transversal surface 42' is suitable to rest on the inner side of the cover layer 410, in particular on inner side of the cover portion 410'.

Preferably, the cover frame 4 is composed of profiles.

Preferably, the cover frame 4 is suitable to constitute a structure which closes on itself, for example rectangularly, for example according to the shape of the transparent element.

In other words, the upright element 41 and the transversal element 42, are profiles and have a substantially C- or U-shaped central cross section.

Preferably, the upright element 41 and the transversal element 42 are obtained by extrusion. For example, the transversal element 42 is obtained by extrusion and subsequent shearing of its ends to obtain the transversal engagement surfaces 421. Still by way of example, the upright element 41 is obtained by extrusion and subsequently worked, for example with mechanical operations of removing chips, in such a way as to obtain the upright engagement surface 411 formed below with respect to the cover layer 410, where said operation forms the triangular cover portion 410'.

Preferably, in this embodiment the upright element 41 and the transversal element 42 have different heights in such a way as to enable said mutual engagement and, on the side facing the weight-bearing frame 3, to have the cover frame 4 aligned on a single plane. In other words, the thicknesses of the upright element 41 and the transversal element 42 are different. In yet other words, the upright element 41 has a thickness at least equal to the sum of the thickness of the transversal element 42 and the thickness of the cover layer 410. Preferably, the side of the cover frame 4 that faces the weight-bearing frame 3 is presented without steps between the upright element 41 and the transversal element 42; in fact, the cover frame 4, presents itself on said side, in its entirety, lying on a same plane.

According to the invention, the cover frame 4 has in its interior, a cavity 400 for a snap-engagement, with the locking elements 5. In other words, the upright element 41 has in its interior, an upright cavity 401 and the transversal element 42 has in its interior a transversal cavity 402, specially formed to snap-engage with the locking elements 5 described below.

Preferably, said cavities 400 extend in length along the entire profile, in both the upright element 41 and the transversal element 42. The upright cavity 401 and the transversal cavity 402 mutually engage with continuity at the corner; in other words, said cavities are mutually joined, creating a single cavity 400 that extends in continuity along the cover frame 4.

Furthermore, the cavity 400 extends for the entire height of the frame 4. In other words, the transversely sectioned cover frame 4 has a first wall 400' and a second wall 400" suitable to delimit the cavity 400 at its sides.

Preferably, said first wall 400' and second wall 400" are suitable to be snap-engaged by the locking elements 5 that go to apply an action on them.

Preferably, the first wall 400' faces the centre of the sash 1 while the second wall 400' is opposite the first, facing the sub-frame.

According to a preferred embodiment, both the first wall 400' and the second wall 400' respectively have a flap 401',401" that protrudes toward the centre of the cavity 400; preferably said flap 401',401" is engageable with the locking element 5, and in particular with its support portion 55.

Preferably, both the first wall 400' and the second wall 400', preferably their flaps 401', 401", are shaped to accommodate special seals, suitable respectively to engage the transparent element 2, and the weight-bearing frame 3. Preferably, the first wall 400' comprises a cavity suitable for housing the respective seal, while the second wall 400" comprises two teeth suitable to fix the respective seal between the cover frame and weight-bearing frame.

According to a preferred embodiment, the first wall 400' is inclined in such a way as to allow the run-off of any rain on its outer body towards the second wall 400".

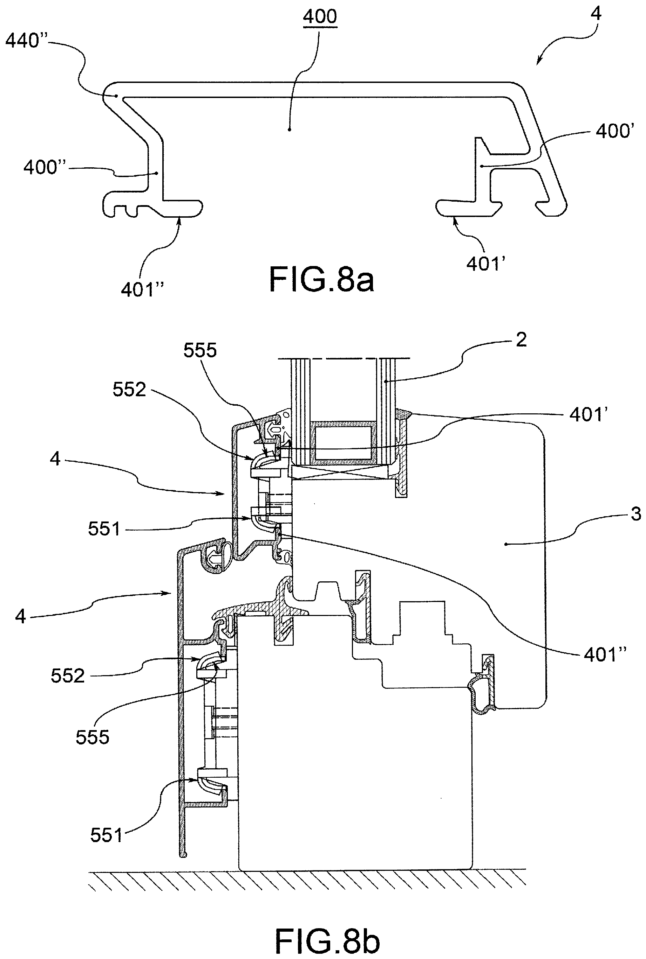

In addition, according to a preferred embodiment the second wall 400" is shaped in such a way as to form a drip-edge protrusion 440"; in other words the drip-edge protrusion 440" is a portion of the second wall 400" that, in particular, is identified by an acute angle such as to avoid that, due to its surface tension, the water rises on the profile up to the weight-bearing frame 3; the water flowing on the outer surface of the cover frame 4 accumulates until if falls in the vicinity of said drip-edge protrusion 440". An illustrative example of a preferred embodiment of the sectioned cover frame is shown in Figures 8a and 8b. It is clear from the accompanying figures, not limiting to the shape of the embodiment of the cover frame 4, that it comprises a single cavity 400 in which to house the locking element 5. It is likewise clear how the side of the cover frame 4 that faces the weight-bearing frame 3 is planar, without steps between the upright element 41 and the transversal element 42.

Preferably, the upright element 41 and the transversal element 42 are integrally joined to each other, so as to create a cover frame 4 in one piece. In other words, the upright element 41 and the transversal element 42 are reciprocally welded in such a way as to execute the above-mentioned reciprocal engagement.

In a further embodiment, the cover frame 4 comprises a joint element 45, preferably L-shaped, suitable to perform the mechanical locking between the upright element 41 and the transversal element 42 coming to be housed in a portion of the upright cavity 401 and in a portion of the transversal cavity 402.

Preferably, in fact, the joint element 45 is formed in such a manner as to be inserted in the upright element 41 and transversal element 42, respectively in the upright cavity 401 and in the transversal cavity 402.

According to a preferred embodiment, the joint element 45 is planar and is suitable to be housed in the cavity 400, between the first wall 400' and the second wall 400". In other embodiments, the joint element 45 has, instead, different heights, respectively for the upright cavity 401 and with the transversal cavity 402, which in some embodiments are foreseeable as different from each other.

Preferably, the joint element 45 comprises, at its sides, special fastening slots, suitable to provide a housing to the walls delimiting the cavity 400 in a locking phase. In other words, after the upright element 41 and the transversal element 42 are inserted on the joint element 45, they are mechanically deformed by plastic deformation, for example by means of special horizontal and/or vertical crimping machines, in such a way that said deformed portions go to lodge inside said fastening slots.

In a further embodiment, said locking element 45 comprises a primary locking element 45' insertable into the respective cavities 400, and a secondary locking element 45" suitable to mechanically engage, for example by means of special screws, the primary locking element 45' so that this engagement sandwich-locks the walls that delimit the cavity 400 thus locking the upright element 41 and transversal element 42.

In a preferred embodiment, the primary locking element 45' and the secondary locking element 45" have the same shape, for example an "L", and both have mutually facing respective holes for the engagement of the respective screws, for example a threaded hole on the primary locking element 45' and a through hole on the secondary locking element 45"; preferably the through hole on the secondary locking element 45" has a countersunk head such as to allow the housing of the screw head.

Preferably, the primary locking element 45' and the secondary locking element 45" are obtained by the same extrusion subsequently sectioned.

Preferably, the secondary locking element 45" has the same height as the height of the portion of the locking element 5 between cover frame 4 and weight-bearing frame 3.

According to a preferred embodiment, the locking element 5 is fixable to the weight-bearing frame 3, for example by screw, and is suitable to lock the transparent element 2 on its outer face 22.

Furthermore, the locking element 5 is suitable to support the cover frame 4, which snap-engages it, housing the locking element 5 in its cavity 400.

In other words, each locking element 5 has this dual function, that of locking transparent element 2 and that of supporting the cover frame 4.

Preferably, each locking element 5 therefore comprises:
i) a locking portion 51 suitable to engage the transparent element 2 on the outer face 22 to lock it to the weight-bearing frame 3;
ii) a support portion 55 suitable to be snap-engaged by the cover frame 4 to perform its locking and support the weight-bearing frame 3.

In addition, in a preferred embodiment, described in more detail below, the support portion 55 further comprises appropriate elements suitable to centre, inside, the cover frame 4 on the locking element 5. In a preferred embodiment, as is evident from the figures provided, the locking element 5 is substantially planar. In other words, the locking element 5 substantially has two faces, one suitable to rest on the weight-bearing frame 3 and one suitable to interact with the cover frame 4, presenting itself with the components, described below, that extend in height perpendicularly towards the weight-bearing frame 3 (in particular its positioning lip 52) and towards the cover frame 4 (in particular its support portion 55).

Preferably, the locking element 5 is made in one piece. For example, the locking element 5 is a plastic element obtained by moulding.

According to a preferred embodiment, the locking element 5 comprises a self-positioning lip 52 suitable to rest on an inner surface of the weight-bearing frame 3 stretching in an interspace between the transparent element 2 and said inner surface on which said transparent element is suitable to rest.

This self-positioning lip 52 is therefore suitable to allow a positioning of the locking element 5 on the weight-bearing frame 3 always at the same height with respect to said inner surface. In other words, the plurality of locking elements 5 comprised in the sash 1 are positioned on the weight-bearing frame 3 arranged on a row, always at the same height; in this way the cavity 400, which extends in the cover frame 4, is suitable to house said row of locking elements 5 inside it.

According to a preferred embodiment, the support portion 55 of the locking element 5 extends in height towards the outside; in other words it extends perpendicularly from the weight-bearing frame 3.

Therefore, as said, the cover frame 4 has the cavity 400 specifically formed to engage the support portion 55, snap-engaging to it.

According to the invention, the support portion 55 comprises two locking wings 551, one in front of the other, that extend in length, so, for example, along the upright axis X-X or the transversal axis Y-Y, along the support portion 55, suitable to snap-engage the walls 400', 400" that delimit the cavity 400.

In a preferred embodiment, each locking wing 551 comprises a plurality of locking teeth 552, having specific shape to perform said snap locking.

According to a preferred embodiment, the number of locking teeth 552 increases as a function of the length of the respective locking wing 551.

In other words, the locking wing 551 has a shape such that it is elastically modifiable in such a way as to modify in its shape to access into the cavity 400 and subsequently widen and perform an action on the walls 400', 400" of said cavity to lock the cover frame 4.

According to a preferred embodiment, at the ends of each locking wing 551, the locking element 5 also comprises centring teeth 555 suitable to engage the walls 400', 400" to maintain the locking element 5 centred in the cavity and, vice versa, the cover frame 4 centred on the respective locking elements 5. Preferably, at its axial ends, at the sides of the locking teeth 552, the support portion 55 has said centring teeth 555, suitable to change elastically to allow insertion of the locking element in the cavity 400, but suitable to remain in elastic tension by acting on said walls 400' and 400" preferably on their flaps 401', 401" that extend for a distance toward the centre of the cavity.

According to a preferred embodiment, the locking element 5 is fixable to the weight-bearing frame 3 through mechanical fastening, for example by a screw 500.

Preferably the locking element 5 is then retained by the head 509 of the screw 500, to the weight-bearing frame 3.

According to the invention, the locking element 5 has a through locking hole 58, preferably having an opening specially formed for the passage of the shank 508 of the screw 500.

Furthermore, in a preferred embodiment, the locking element 5 has a release hole 59 having an opening specially formed for the passage of the head 509 of the screw 500, and the passage of the head 509 through said release hole 59 allows the disassembly of the locking element 5, and then the cover frame 4, from the weight-bearing frame 4.

Preferably, said release hole 59 is alongside the locking hole 58. According to a preferred embodiment the two holes are located in a central position of the locking element 5, in particular, preferably, the locking hole 58 is at the centre of the locking element 5 so that all locking actions are discharged onto it.

According to the invention, the locking hole 58 is located between the two wings 551. Preferably there is a release hole also located between the two wings, said holes extending in a direction parallel to them. The passage of the shank 508 between the locking hole 58 and the release hole 59 then occurs by axially translating the locking element 55; in other words by, by translating the locking element 55 partially housed in the cavity 400, for example translating along an upright axis X-X, if engaged with the upright element 41, or by translating it along a transversal axis Y-Y, if engaged with the transversal element 42.

In a preferred embodiment, the locking hole 58 and the release hole 59 are mutually divided by a retention septum 56, or two retention wings or protuberances, suitable, with its transversal presence, to impede the passage of the shank 508 between the locking hole 58 and the release hole 59.

Preferably, the retention septum 56 makes necessary a predefined action on the locking element 5 to obtain its breaking or bending, and then to allow the disassembly of these from the weight-bearing frame 3; in this way the transparent element 2 is securely locked on the weight-bearing frame 3.

Furthermore, the locking element 5 has a bead 581, in the vicinity of the locking hole 58, engageable by the head of the screw 508; preferably said cord 581 has a greater height than the portion of the locking element 5 surrounding the release hole 59. In other words, along the axial direction along which are arranged the locking hole 58 and the release hole 59, in the vicinity of said holes, the locking element 5 has different heights, in such a way as to favour locking with the screw 50, there being greater thickness, and similarly favouring the unlocking by finding more space and overcoming said step.

In other words, according to what is described above and as shown in the accompanying figures, the locking element 5 can be crossed substantially perpendicularly by the screw 500; in particular the screw 500 is then inserted in the weight-bearing frame 3 by extending perpendicularly to it in the direction of the weight-bearing frame 3. In other words, the portion of the screw 500 that protrudes from the weight-bearing frame 3 is housed in the cavity 400 of the cover frame 4.

According to a preferred embodiment, the invention also relates to the method of assembling the sash 1 described above.

Preferably, said method comprising the steps of:
- assembling the weight-bearing frame 3;
- inserting the transparent element 2 onto the weight-bearing frame 3, in such a way that the weight-bearing frame 3 engages the inner face 21 of the transparent element 2;
- attaching the locking elements 5, preferably by means of screws 500, to the weight-bearing frame 3 in such a way as to engage the outer face 22 of the transparent element 2 locking it to the weight-bearing frame 3;
- mounting the cover frame 4 mutually engaging the upright elements 41 and the transversal elements 42 in such a way that the upright engagement surface 411 and the transversal engagement surface 421 engage each other below the cover layer 410;
- snap-fitting the cover frame 4 onto the respective locking elements 5.

According to a preferred embodiment, the locking elements 5 are a plurality, preferably a series of elements, mounted in a single row to be housed in the cavity 400, respectively along the directions of extension of the upright cavity 401 and the transversal cavities 402.

Preferably, the step of mounting the cover frame 4, and then mutually engaging the upright 41 with the transversal elements 42 is executable also in conjunction with the other steps preceding that of assembling the cover frame 4 on the locking elements 5 mounted on the weight-bearing frame 3.

According to a preferred embodiment, the cover frame 4 is mountable either independently, engaging the upright elements 41 and the transversal elements 42 and subsequently mounted on the weight-bearing frame 3 by means of the locking elements 5. Or, the transversal elements 42 are first snap-mounted directly on the weight-bearing frame 3 and then the upright elements 41. In particular, this type of assembly of the cover frame 4 directly on the weight-bearing frame 3 is particularly suitable for embodiments with the upright elements 41 comprising the cover layer 410.

According to a preferred embodiment, the invention also relates to the method of disassembling the sash 1 described above.

In fact, in other words, the method of disassembly requires the step of moving, using a suitable tool, each locking element 5, in such a way that the shank of the screw 508 housed in the locking hole 58 is moved into the release hole 59. Once said step is performed, it will then be possible to remove the cover frame 4 from the weight-bearing frame 3, extracting the cover frame 4 and the locking elements 5 snap-locked into it, i.e., pulling the locking elements 5 out of the screws 500 provided.

Innovatively, the sash covered by this invention is an alternative to currently known solutions in the field.

Advantageously, the cover frame having structural and aesthetic characteristics different from the cover frames of the currently known sashes.

Advantageously the cover frame, mounted on the sash, has an aesthetic impact totally different from currently known sashes.

Moreover, advantageously, the cover frame is suitable to solve a series of technical issues related to the engagement between upright elements and transversal elements. In particular, if the mutual engagement between the two components, upright element and transversal element, is not perfectly achieved, for example, the two elements are not mutually engaged in such a way that the two engagement surfaces are perfectly facing, due to imprecise machining or assembly operations, between the two components there is a particularly visible slot. Since, in the sash covered by this invention, the slot is below the cover layer, said defect, is not visible, and therefore is not perceived as such by the final consumer of the sash.

A further advantage is therefore that of a significant cost savings in the production of the upright elements and transversal elements in which is no longer required that the upright and transversal engagement surfaces have tight tolerances.

A still further advantage occurs during assembly of the cover frame, a step now substantially simplified because no longer requiring particular attention from the installer, unlike the assembly of the frames typical of the solutions of the known art that, instead, always require particular attention and energy in the engagement between transversal element and upright element to eliminate as much as possible the slot between the two.

Innovatively, the locking element engages the transparent element, locking it on the weight-bearing frame, so that it is not locked to the weight-bearing frame by the cover frame.

In fact, advantageously, the cover frame does not lock the transparent element on the weight-bearing frame and therefore has the sole purpose of being the cover on the outer side of the weight-bearing frame: the design and production of the weight-bearing frame are thus released from said need to support or lock the transparent element to the weight-bearing frame.

Moreover, advantageously, the locking element is easily obtainable for example by plastic moulding. Advantageously, in fact, the locking elements have a simple shape, being of simple construction and being simple to use.

Again, advantageously, the locking element is positionable by means of the self-positioning lip, always at the same height on the weight-bearing frame. Advantageously, in this world the locking elements are placed on one line, not on several lines as in the solutions of the known art, thus making unnecessary the specific operations of positioning the locking elements, for example measuring or marking the weight-bearing frame.

According to a further advantageous aspect, each locking element is fixable to the weight-bearing frame by a screw, through a specially formed locking hole.

A still further advantageous aspect lies in the fact that the disassembly of the locking element is obtainable by means of its translation, in such a way that the screw is aligned from the locking hole to the release hole.

Advantageously, between the mounting hole and the release hole a retention septum is provided suitable, with its presence, to oppose said translation; advantageously the action of translation is to be such as to cause the modification or breakage of the retention septum that, therefore is suitable to maintain the locking elements in a secure position over time.

Moreover, advantageously, the cover frame is obtained by means of profiles provided with a special cavity suitable to be engaged by the locking elements. Advantageously, the shape of the profile is very simple and constitutes the cavity itself in its entirety. In fact, the locking elements being on one row, the cover frame has a single cavity, and not a multiplicity of cavities as in the solutions of the known art. Advantageously, the cover frame is also suitable to totally cover each locking element and the screw that locks it to the weight-bearing frame, obtaining a further advantage from a point of view of its aesthetic impact.

Innovatively, the cover frame has, at its end, an acute angle suitable to perform the action of breaking the drop.

Innovatively, the joint element is planar, extending on a plane, and thus presenting a single height. Advantageously, the joint element is obtained by sectioning an extruded piece.

Innovatively, even the method of assembly and disassembly are absolutely different than those typical of the prior art requiring, in fact, the performance of new steps or requiring the performance of certain steps at different times with respect to what is usually done so far.

In accordance with the above description, it is known how the sash in its entirety, is suitable to also comprise the frame, i.e., the part of the sash that is fixed to the sub-frame inside the architectural opening. The casing is formed by the same components mentioned and described above; in other words, as is indeed widely visible in the drawings, the sash covered by this invention comprises both the casement, described above, and the frame. The casement is movable, for example on special hinges, the one of the frame remains fixed and locked to the sub-frame to provide support for said casement.

The frame has the same components of the casement portion, in other words even the casing comprises the frame towards the inside, preferably in wood, and the cover frame mounted on it, by means of the locking elements. Each of the above-mentioned characteristics and above mentioned advantages, are a result of the components that comprise the frame, such as, for example, the presence of the cover layer in the upright element, or the method of locking the locking elements on the weight-bearing frame. In other words the components of the frame have the same characteristics as the corresponding components of the casement, but are different in size with respect to the latter. As said, the characteristics are substantially the same, and the distinctions are substantially minimal, for example the casing locking elements do not have the self-positioning lip 52 as that of the corresponding locking elements described above, but have a positioning flap 53 having the same purpose but different position, as visible in the drawings.

To the embodiments of the sash and above-mentioned methods, one skilled in the art, in order to meet specific needs, may make variants or substitutions of elements with others functionally equivalent.

Even these variants are contained within the scope of protection, as defined by the following claims.

Moreover, each of the variants described as belonging to a possible embodiment can be realized independently of the other variants described.

## Claims

1. Sash (1) for closing an architectural opening having an inner side and an outer side, comprising:
- a transparent element (2), preferably of a planar shape, suitable to allow the passage of light through the sash (1), having an inner face (21) and an outer face (22) ;
- a weight-bearing frame (3), placed towards the inside, preferably in wood, suitable to support the transparent element (10) and lock it engaging the inner face (21);
- a cover frame (4), placed towards the outside, preferably in aluminium, fitted on the weight-bearing frame (3), suitable to protect the latter on the outer side;
- a plurality of locking elements (5) attachable to the weight-bearing frame (3) wherein a locking element (5) comprises:
i) a locking portion (51) suitable to engage the transparent element (2) on the outer face (22) to lock it to the weight-bearing frame (3);
ii) a support portion (55) suitable to be snap-engaged by the cover frame (4) to perform its locking to the weight-bearing frame (3);
wherein the support portion (55) extends in height toward the outside, wherein the cover frame (4) has a cavity (400) specially shaped to snap-engage the support portion (55) and lock to it;
wherein the support portion (55) comprises two locking wings (551), one in front of the other, which extend in length along the support portion (55), suitable to snap-engage the walls (400', 400") surrounding the cavity (400) ;
wherein the locking element (5) is attachable to the weight-bearing frame (3) by a screw (500), **characterised in that** the locking element is presenting a through locking hole (58) located between the two wings (551).

2. Sash (1) according to claim 1, wherein the locking element (5) is made in one piece.

3. Sash (1) according to any of the previous claims, wherein the locking element (5) comprises a self-positioning lip (52) suitable to rest on an inner surface of the weight-bearing frame (3) stretching in an interspace between the transparent element (2) and said inner surface on which said transparent element rests, in such a way as to allow a positioning of the locking element (5) on the weight-bearing frame (3) always at the same height.

4. Sash (1) according to any of the preceding claims, wherein each locking wing (551) comprises a plurality of locking teeth (552).

5. Sash (1) according to any of the preceding claims, wherein each locking wing (551) comprises a plurality of centring teeth (555), for example at the ends of the wings (551), suitable to keep the locking element (5) centred in the cavity (400) of the cover frame (4), engaging the walls thereof (400', 400"), preferably the flaps (401', 401").

6. Sash (1) according to any of the previous claims, wherein the locking element (5) is attachable to the weight-bearing frame (3) by a screw (500), so that it is retained by the head (509) of the screw (500), wherein said through locking hole (58) has a specially shaped aperture for the passage of the shank (508) of the screw (500).

7. Sash (1) according to claim 6, wherein the locking element (5) has a release hole (59) having a specially shaped aperture for the passage of the head (509) of the screw (500), wherein the release hole (59) is positioned alongside the locking hole (58).

8. Sash (1) according to claim 7, wherein the locking hole (58) and the release hole (59) are mutually divided by a retention septum (56) suitable to adapt itself elastically and/or break to allow the passage of the shank (508) between the locking hole (58) and the release hole (59).

9. Sash (1) according to any of the claims 6 or 7, wherein the locking element (5) has a bead (581), in the vicinity of the locking hole (58), engageable by the head of the screw (508) having a greater height than the portion of the locking element (5) surrounding the release hole (59).

10. Sash (1) according to any of the previous claims, wherein the cover frame (4) comprises two upright elements (41) and two transversal elements (42) suitable to engage each other at the corner to form said cover frame (4), wherein the upright element (41) comprises an upright cavity (401) and the transversal element (42) comprises a transversal cavity (402).

11. Sash (1) according to claim 10, wherein the cover frame (4) comprises joint elements (45), preferably L-shaped, suitable to perform the locking between the upright element (41) and the transversal element (42) coming to be housed in a portion of the upright cavity (401) and in a portion of the transversal cavity (402).

12. Sash (1) according to any of the previous claims, wherein the cover frame (4), is a profiled section and has a substantially "C" or "U" shaped cross-section.

13. Sash (1) according to any of the previous claims, wherein the transparent element (2) is a glass plate, or is double glazing or a glass block, or a glass block with integrated curtain.

14. Sash (1) according to any of the previous claims wherein the sash (1) is a window or French window.

15. Locking element (5) mountable in a sash (1) according to any of the claims 1-14 for closing an architectural opening having an inner side and an outer side, the sash comprising:
- a transparent element (2), preferably of a planar shape, suitable to allow the passage of light through the sash (1), having an inner face (21) and an outer face (22) ;
- a weight-bearing frame (3), placed towards the inside, preferably in wood, suitable to support the transparent element (10) and lock it engaging the inner face (21);
- a cover frame (4), placed towards the outside, preferably in aluminium, fitted on the weight-bearing frame (3), suitable to protect the latter on the outer side;
wherein the locking element (5) is made in a single piece, attachable to the weight-bearing frame (3), comprising:
i) a locking portion (51) suitable to engage the transparent element (2) to lock it to the weight-bearing frame (3);
ii) a support portion (55), preferably of locking teeth (552), suitable to be snap-engaged by the cover frame (4) to perform its locking to the weight-bearing frame (3);
wherein the support portion (55) extends in height toward the outside, wherein the cover frame (4) has a cavity (400) specially shaped to snap-engage the support portion (55) and lock to it;
wherein the support portion (55) comprises two locking wings (551), one in front of the other, which extend in length along the support portion (55), suitable to snap-engage the walls (400', 400") surrounding the cavity (400) ;
wherein the locking element (5) is attachable to the weight-bearing frame (3) by a screw (500), **characterised in that** the locking element is presenting a through locking hole (58) located between the two wings (551).

16. Locking element (5) according to claim 15, attachable to the weight-bearing frame (3) by a screw (500), comprising a through locking hole (58) having a specially shaped aperture for the passage of the shank (508) of the screw (500) and a release hole (59) having a specially shaped aperture for the passage of the head (509) of the screw (500), wherein the release hole (59) is alongside the locking hole (58)

17. Assembly method of a sash (1) according to any of the previous claims from 1 to 14, comprising the steps of:
- assembling the weight-bearing frame (3);
- inserting the transparent element (2) onto the weight-bearing frame (3), in such a way that the weight-bearing frame (3) engages the inner face (21) of the transparent element (2);
- attaching the locking elements (5) by means of screws (500) to the weight-bearing frame (3) in such a way as to engage the outer face (22) of the transparent element (2) locking it to the weight-bearing frame (3);
- snap-fitting the cover frame (4) onto the respective locking elements (5).

18. Disassembly method of a sash (1) according to any of the previous claims from 1 to 14, comprising the steps of:
- moving, using a suitable tool, each locking element (5), in such a way that the shank of the screw (508) housed in the locking hole (58) is moved into the release hole (59);
- removing the cover frame (4) from the weight-bearing frame (3), extracting the cover frame (4) and the locking elements (5) snap-locked into it, pulling the locking elements (5) out of the screws provided (500).

## Patentansprüche

1. Schiebeelement (1) zum Verschließen einer architektonischen Öffnung, welche eine innere Seite und eine äußere Seite aufweist, umfassend:
- ein transparentes Element (2), vorzugsweise mit einer planaren Form, welches dazu geeignet ist, den Durchtritt von Licht durch das Schiebeelement (1) zu ermöglichen, welches eine innere Fläche (21) und eine äußere Fläche (22) aufweist;
- einen lasttragenden Rahmen (3), welcher in Richtung der Innenseite platziert ist, vorzugsweise aus Holz, welcher dazu geeignet ist, das transparente Element (10) zu haltern und es mit der inneren Fläche (21) in Eingriff tretend zu verriegeln;
- einen Abdeckrahmen (4), welcher in Richtung der Außenseite platziert ist, vorzugsweise aus Aluminium, welcher an dem lasttragenden Rahmen (3) angebracht ist, welcher dazu geeignet ist, den Letzteren an der äußeren Seite zu schützen;
- eine Mehrzahl von Verriegelungselementen (5), welche an dem lasttragenden Rahmen (3) anbringbar sind, wobei ein Verriegelungselement (5) umfasst:
i) einen Verriegelungsabschnitt (51), welcher dazu geeignet ist, mit dem transparenten Element (2) an der äußeren Fläche (22) in Eingriff zu treten, um es an dem lasttragenden Rahmen (3) zu verriegeln;
ii) einen Halterungsabschnitt (55), welcher dazu geeignet ist, durch den Abdeckrahmen (4) in Schnappeingriff genommen zu werden, um sein Verriegeln an dem lasttragenden Rahmen (3) durchzuführen;
wobei sich der Halterungsabschnitt (55) in einer Höhe in Richtung der Außenseite erstreckt, wobei der Abdeckrahmen (4) einen Hohlraum (400) aufweist, welcher speziell geformt ist, um mit dem Halterungsabschnitt (55) in Schnappeingriff zu treten und an ihm zu verriegeln;
wobei der Halterungsabschnitt (55) zwei Verriegelungsflügel (551) umfasst, einer vor dem anderen, welche sich in einer Länge entlang des Halterungsabschnitts (55) erstrecken, welche dazu geeignet sind, mit den Wänden (400', 400") in Schnappeingriff zu treten, welche den Hohlraum (400) umgeben;
wobei das Verriegelungselement (5) durch eine Schraube (500) an dem lasttragenden Rahmen (3) anbringbar ist,
**dadurch gekennzeichnet, dass** das Verriegelungselement ein Verriegelungsdurchgangsloch (58) darstellt, welches zwischen den zwei Flügeln (551) angeordnet ist.

2. Schiebeelement (1) nach Anspruch 1, wobei das Verriegelungselement (5) aus einem Stück hergestellt ist.

3. Schiebeelement (1) nach einem der vorhergehenden Ansprüche, wobei das Verriegelungselement (5) eine Selbstpositionierungslippe (52) umfasst, welche dazu geeignet ist, an einer inneren Fläche des lasttragenden Rahmens (3) anzuliegen, welche sich in einer solchen Weise in einen Zwischenraum zwischen dem transparenten Element (2) und der inneren Fläche ausdehnt, an welcher das transparente Element anliegt, dass sie eine Positionierung des Verriegelungselements (5) an dem lasttragenden Rahmen (3) immer in der gleichen Höhe ermöglicht.

4. Schiebeelement (1) nach einem der vorhergehenden Ansprüche, wobei jeder Verriegelungsflügel (551) eine Mehrzahl von Verriegelungszähnen (552) umfasst.

5. Schiebeelement (1) nach einem der vorhergehenden Ansprüche, wobei jeder Verriegelungsflügel (551) zum Beispiel an den Enden der Flügel (551) eine Mehrzahl von Zentrierzähnen (555) umfasst, welche dazu geeignet sind, das Verriegelungselement (5) in dem Hohlraum (400) des Abdeckrahmens (4) mit den Wänden davon (400', 400"), vorzugsweise den Laschen (401', 402"), in Eingriff tretend zentriert zu halten.

6. Schiebeelement (1) nach einem der vorhergehenden Ansprüche, wobei das Verriegelungselement (5) durch eine Schraube (500) an dem lasttragenden Rahmen (3) anbringbar ist, sodass es durch den Kopf (509) der Schraube (500) zurückgehalten ist, wobei das Verriegelungsdurchgangsloch (58) eine spezielle geformte Öffnung für den Durchtritt des Schafts (508) der Schraube (500) aufweist.

7. Schiebeelement (1) nach Anspruch 6, wobei das Verriegelungselement (5) ein Freigabeloch (59) aufweist, welches eine speziell geformte Öffnung für den Durchtritt des Kopfs (509) der Schraube (500) aufweist, wobei das Freigabeloch (59) neben dem Verriegelungsloch (58) positioniert ist.

8. Schiebeelement (1) nach Anspruch 7, wobei das Verriegelungsloch (58) und das Freigabeloch (59) durch eine Haltetrennwand (56) voneinander getrennt sind, welche dazu geeignet ist, sich selbst elastisch anzupassen und/oder zu brechen, um den Durchtritt des Schafts (508) zwischen dem Verriegelungsloch (58) und dem Freigabeloch (59) zu ermöglichen.

9. Schiebeelement (1) nach einem der Ansprüche 6 oder 7, wobei das Verriegelungselement (5) in der Nähe des Verriegelungslochs (58) eine Wulst (581) aufweist, welche durch den Kopf der Schraube (508) in Eingriff genommen werden kann, welche eine größere Höhe als der Abschnitt des Verriegelungselements (5) aufweist, welcher das Freigabeloch (59) umgibt.

10. Schiebeelement (1) nach einem der vorhergehenden Ansprüche, wobei der Abdeckrahmen (4) zwei aufrechte Elemente (41) und zwei transversale Elemente (42) umfasst, welche dazu geeignet sind, an der Ecke miteinander in Eingriff zu treten, um den Abdeckrahmen (4) zu bilden, wobei das aufrechte Element (41) einen aufrechten Hohlraum (401) umfasst und das transversale Element (42) einen transversalen Hohlraum (402) umfasst.

11. Schiebeelement (1) nach Anspruch 10, wobei der Abdeckrahmen (4) vorzugsweise L-förmige Gelenkelemente (45) umfasst, welche dazu geeignet sind, das Verriegeln zwischen dem aufrechten Element (41) und dem transversalen Element (42) durchzuführen, für welche vorgesehen ist, dass sie in einem Abschnitt des aufrechten Hohlraums (401) und in einem Abschnitt des transversalen Hohlraums (402) aufgenommen sind.

12. Schiebeelement (1) nach einem der vorhergehenden Ansprüche, wobei der Abdeckrahmen (4) ein profilierter Teilabschnitt ist und einen im Wesentlichen "C"- oder "U"-förmigen Querschnitt aufweist.

13. Schiebeelement (1) nach einem der vorhergehenden Ansprüche, wobei das transparente Element (2) eine Glasplatte ist, oder doppelt verglast oder ein Glasblock ist, oder ein Glasblock mit integrierter Verdunkelung ist.

14. Schiebeelement (1) nach einem der vorhergehenden Ansprüche, wobei das Schiebeelement (1) ein Fenster oder eine Fenstertür ist.

15. Verriegelungselement (5), welches in einem Schiebeelement (1) nach einem der Ansprüche 1-14 montierbar ist, zum Verschließen einer architektonischen Öffnung, welche eine Innenseite und eine Außenseite aufweist, wobei das Schiebeelement umfasst:
- ein transparentes Element (2), vorzugsweise mit einer planaren Form, welches dazu geeignet ist, den Durchtritt von Licht durch das Schiebeelement (1) zu ermöglichen, welches eine innere Fläche (21) und eine äußere Fläche (22) aufweist;
- einen lasttragenden Rahmen (3), welcher in Richtung der Innenseite platziert ist, vorzugsweise aus Holz, welcher dazu geeignet ist, das transparente Element (10) zu haltern und es mit der inneren Fläche (21) in Eingriff tretend zu verriegeln;
- einen Abdeckrahmen (4), welcher in Richtung der Außenseite platziert ist, vorzugsweise aus Aluminium, welcher an dem lasttragenden Rahmen (3) angebracht ist, welcher dazu geeignet ist, den Letzteren an der äußeren Seite zu schützen;
wobei das Verriegelungselement (5) aus einem einzigen Stück hergestellt ist, welches an dem lasttragenden Rahmen (3) anbringbar ist, umfassend:
i) einen Verriegelungsabschnitt (51), welcher dazu geeignet ist, mit dem transparenten Element (2) in Eingriff zu treten, um es an dem lasttragenden Rahmen (3) zu verriegeln;
ii) einen Halterungsabschnitt (55), vorzugsweise aus Verriegelungszähnen (552), welcher dazu geeignet ist, durch den Abdeckrahmen (4) in Schnappeingriff genommen zu werden, um sein Verriegeln an dem lasttragenden Rahmen (3) durchzuführen;
wobei sich der Halterungsabschnitt (55) in einer Höhe in Richtung der Außenseite erstreckt, wobei der Abdeckrahmen (4) einen Hohlraum (400) aufweist, welcher speziell geformt ist, um mit dem Halterungsabschnitt (55) in Schnappeingriff zu treten und an ihm zu verriegeln;
wobei der Halterungsabschnitt (55) zwei Verriegelungsflügel (551) um-fasst, einer vor dem anderen, welche sich in einer Länge entlang des Halterungsabschnitts (55) erstrecken, welche dazu geeignet sind, mit den Wänden (400', 400") in Schnappeingriff zu treten, welche den Hohl-raum (400) umgeben;
wobei das Verriegelungselement (5) durch eine Schraube (500) an dem lasttragenden Rahmen (3) anbringbar ist,
**dadurch gekennzeichnet, dass** das Verriegelungselement ein Verriegelungsdurchgangsloch (58) darstellt, welches zwischen den zwei Flügeln (551) angeordnet ist.

16. Verriegelungselement (5) nach Anspruch 15, welches durch eine Schraube (500) an dem lasttragenden Rahmen (3) anbringbar ist, welches ein Verriegelungsdurchgangsloch (58) mit einer speziell geformten Öffnung für den Durchtritt des Schafts (508) der Schraube (500) und ein Freigabeloch (59) mit einer speziell geformten Öffnung für den Durchtritt des Kopfs (509) der Schraube (500) umfasst, wobei das Freigabeloch (59) neben dem Verriegelungsloch (58) liegt.

17. Montageverfahren eines Schiebeelements (1) nach einem der vorhergehenden Ansprüche 1 bis 14, umfassend die folgenden Schritte:
- Montieren des lasttragenden Rahmens (3);
- Einfügen des transparenten Elements (2) auf den lasttragenden Rahmen (3) in einer solchen Weise, dass der lasttragende Rahmen (3) mit der inneren Fläche (21) des transparenten Elements (2) in Eingriff tritt;
- Anbringen der Verriegelungselemente (5) an dem lasttragenden Rahmen (3) mittels Schrauben (500) in einer solchen Weise, dass sie mit der äußeren Fläche (22) des transparenten Elements (2) es an dem lasttragenden Rahmen (3) verriegelnd in Eingriff treten;
- Schnappeinrasten des Abdeckrahmens (4) auf die jeweiligen Verriegelungselemente (5).

18. Demontageverfahren eines Schiebeelements (1) nach einem der vorhergehenden Ansprüche von 1 bis 14, umfassend die folgenden Schritte:
- Bewegen jedes Verriegelungselements (5) unter Verwendung eines geeigneten Werkzeugs in einer solchen Weise, dass der Schaft der Schraube (508), welcher in dem Verriegelungsloch (58) aufgenommen ist, in das Freigabeloch (59) bewegt wird;
- Entfernen des Abdeckrahmens (4) von dem lasttragenden Rahmen (3), Entnehmen des Abdeckrahmens (4) und der in diesem schnappverriegelten Verriegelungselemente (5), Ziehen der Verriegelungselemente (5) aus den bereitgestellten Schrauben (500).

## Revendications

1. Châssis (1) pour fermer une ouverture architecturale ayant un côté intérieur et un côté extérieur, comprenant :
- un élément transparent (2), de préférence d'une forme planaire, approprié pour permettre le passage de lumière à travers le châssis (1), ayant une face intérieure (21) et une face extérieure (22) ;
- un cadre porteur de charge (3), placé vers l'intérieur, de préférence en bois, approprié pour supporter l'élément transparent (10) et le verrouiller en engageant la face intérieure (21) ;
- un cadre de protection (4), placé vers l'extérieur, de préférence en aluminium, ajusté sur le cadre porteur de charge (3), approprié pour protéger ce dernier sur le côté extérieur ;
- une pluralité d'éléments de verrouillage (5) pouvant être attachés au cadre porteur de charge (3) dans lequel un élément de verrouillage (5) comprend :
i) une partie de verrouillage (51) appropriée pour engager l'élément transparent (2) sur la face extérieure (22) afin de le verrouiller sur le cadre porteur de charge (3) ;
ii) une partie de support (55) appropriée pour être engagée par encliquetage par le cadre de protection (4) afin de réaliser son verrouillage sur le cadre porteur de poids (3) ;
dans lequel la partie de support (55) s'étend en hauteur vers l'extérieur, dans lequel le cadre de protection (4) comporte une cavité (400) spécialement façonnée pour engager par encliquetage la partie de support (55) et se verrouiller sur elle ;
dans lequel la partie de support (55) comprend deux ailes de verrouillage (551), l'une devant l'autre, qui s'étendent en longueur le long de la partie de support (55), appropriées pour engager par encliquetage les parois (400', 400") entourant la cavité (400) ;
dans lequel l'élément de verrouillage (5) peut être attaché au cadre porteur de charge (3) par une vis (500),
**caractérisé en ce que** l'élément de verrouillage présente un trou de verrouillage traversant (58) situé entre les deux ailes (551).

2. Châssis (1) selon la revendication 1, dans lequel l'élément de verrouillage (5) est fabriqué en une seule pièce.

3. Châssis (1) selon l'une quelconque des revendications précédentes, dans lequel l'élément de verrouillage (5) comprend un rebord d' auto-positionnement (52) approprié pour reposer sur une surface intérieure du cadre porteur de charge (3) s'étirant dans un interstice entre l'élément transparent (2) et ladite surface intérieure sur laquelle ledit élément transparent repose, de manière à permettre un positionnement de l'élément de verrouillage (5) sur le cadre porteur de charge (3) toujours à la même hauteur.

4. Châssis (1) selon l'une quelconque des revendications précédentes, dans lequel chaque aile de verrouillage (551) comprend une pluralité de dents de verrouillage (552).

5. Châssis (1) selon l'une quelconque des revendications précédentes, dans lequel chaque aile de verrouillage (551) comprend une pluralité de dents de centrage (555), par exemple aux extrémités des ailes (551), appropriées pour maintenir l'élément de verrouillage (5) centré dans la cavité (400) du cadre de protection (4), engageant les parois (400', 400") de celle-ci, de préférence les rabats (401', 401").

6. Châssis (1) selon l'une quelconque des revendications précédentes, dans lequel l'élément de verrouillage (5) peut être attaché au cadre porteur de charge (3) par une vis (500), de telle sorte qu'il est retenu par la tête (509) de la vis (500), dans lequel ledit trou de verrouillage traversant (58) a une ouverture spécialement façonnée pour le passage de la tige (508) de la vis (500).

7. Châssis (1) selon la revendication 6, dans lequel l'élément de verrouillage (5) possède un trou de libération (59) ayant une ouverture spécialement façonnée pour le passage de la tête (509) de la vis (500), dans lequel le trou de libération (59) est positionné à côté du trou de verrouillage (58).

8. Châssis (1) selon la revendication 7, dans lequel le trou de verrouillage (58) et le trou de libération (59) sont mutuellement divisés par une cloison de retenue (56) appropriée pour s'adapter élastiquement et/ou rompre pour permettre le passage de la tige (508) entre le trou de verrouillage (58) et le trou de libération (59).

9. Châssis (1) selon l'une quelconque des revendications 6 ou 7, dans lequel l'élément de verrouillage (5) possède un cordon (581), à proximité du trou de verrouillage (58), pouvant être engagé par la tête de la vis (508) ayant une hauteur plus élevée que la partie de l'élément de verrouillage (5) entourant le trou de libération (59).

10. Châssis (1) selon l'une quelconque des revendications précédentes, dans lequel le cadre de protection (4) comprend deux éléments verticaux (41) et deux éléments transversaux (42) appropriés pour s'engager mutuellement au niveau du coin pour former ledit cadre de protection (4), dans lequel l'élément vertical (41) comprend une cavité verticale (401) et l'élément transversal (42) comprend une cavité transversale (402).

11. Châssis (1) selon la revendication 10, dans lequel le cadre de protection (4) comprend des éléments de joint (45), de préférence en forme de L, appropriés pour effectuer le verrouillage entre l'élément vertical (41) et l'élément transversal (42) venant à être logés dans une partie de la cavité verticale (401) et dans une partie de la cavité transversale (402).

12. Châssis (1) selon l'une quelconque des revendications précédentes, dans lequel le cadre de protection (4) est une section profilée et a une section en coupe sensiblement en forme de « C » ou de « U ».

13. Châssis (1) selon l'une quelconque des revendications précédentes, dans lequel l'élément transparent (2) est une plaque en verre, ou est du double vitrage ou un bloc de verre, ou un bloc de verre avec un rideau intégré.

14. Châssis (1) selon l'une quelconque des revendications précédentes, dans lequel le châssis (1) est une fenêtre ou une porte-fenêtre.

15. Élément de verrouillage (5) pouvant être monté dans un châssis (1) selon l'une quelconque des revendications 1-14 pour fermer une ouverture architecturale ayant un côté intérieur et un côté extérieur, le châssis comprenant :
- un élément transparent (2), de préférence d'une forme planaire, approprié pour permettre le passage de lumière à travers le châssis (1), ayant une face intérieure (21) et une face extérieure (22) ;
- un cadre porteur de charge (3), placé vers l'intérieur, de préférence en bois, approprié pour supporter l'élément transparent (10) et le verrouiller en engageant la face intérieure (21) ;
- un cadre de protection (4), placé vers l'extérieur, de préférence en aluminium, ajusté sur le cadre porteur de charge (3), approprié pour protéger ce dernier sur le côté extérieur ;
dans lequel l'élément de verrouillage (5) est construit en une seule pièce, pouvant être attaché au cadre porteur de charge (3), comprenant :
i) une partie de verrouillage (51) appropriée pour engager l'élément transparent (2) afin de le verrouiller sur le cadre porteur de charge (3) ;
ii) une partie de support (55), de préférence des dents de verrouillage (552), appropriée pour être engagée par encliquetage par le cadre de protection (4) afin de réaliser son verrouillage sur le cadre porteur de poids (3) ;
dans lequel la partie de support (55) s'étend en hauteur vers l'extérieur, dans lequel le cadre de protection (4) comporte une cavité (400) spécialement façonnée pour engager par encliquetage la partie de support (55) et se verrouiller sur elle ;
dans lequel la partie de support (55) comprend deux ailes de verrouillage (551), l'une devant l'autre, qui s'étendent en longueur le long de la partie de support (55), appropriées pour engager par encliquetage les parois (400', 400") entourant la cavité (400) ;
dans lequel l'élément de verrouillage (5) peut être attaché au cadre porteur de charge (3) par une vis (500),
**caractérisé en ce que** l'élément de verrouillage présente un trou de verrouillage traversant (58) situé entre les deux ailes (551).

16. Élément de verrouillage (5) selon la revendication 15, pouvant être attaché au cadre porteur de charge (3) par une vis (500), comprenant un trou de verrouillage traversant (58) ayant une ouverture spécialement façonnée pour le passage de la tige (508) de la vis (500) et un trou de libération (59) ayant une ouverture spécialement façonnée pour le passage de la tête (509) de la vis (500), dans lequel le trou de libération (59) se trouve à côté du trou de verrouillage (58).

17. Procédé de montage d'un châssis (1) selon l'une quelconque des revendications précédentes de 1 à 14, comprenant les étapes consistant à :
- monter le cadre porteur de charge (3) ;
- insérer l'élément transparent (2) sur le cadre porteur de charge (3), de telle sorte que le cadre porteur de charge (3) engage la face intérieure (21) de l'élément transparent (2) ;
- attacher les éléments de verrouillage (5) au moyen de vis (500) sur le cadre porteur de charge (3) de manière à engager la face extérieure (22) de l'élément transparent (2), le verrouillant sur le cadre porteur de charge (3) ;
- ajuster par encliquetage le cadre de protection (4) sur les éléments de verrouillage respectifs (5).

18. Procédé de démontage d'un châssis (1) selon l'une quelconque des revendications précédentes 1 à 14, comprenant les étapes consistant à :
- déplacer, en utilisant un outil approprié, chaque élément de verrouillage (5), de telle sorte que la tige de la vis (508) logée dans le trou de verrouillage (58) est déplacée dans le trou de libération (59) ;
- retirer le cadre de protection (4) du cadre porteur de charge (3), extraire le cadre de protection (4) et les éléments de verrouillage (5) encliquetés dans celui-ci, tirer les éléments de verrouillage (5) à l'extérieur des vis (500) prévues.
